# EUROPEAN PATENT SPECIFICATION

(11) **EP 0 387 967 B1**
(45) Date of publication and mention of the grant of the patent: **16.06.1993**
(21) Application number: 90200602.2
(22) Date of filing: 13.03.1990
(51) Int. Cl.: F16L 3/12, E04D 13/08

(54) **Pipe-clip**
Rohrschelle
Collier de serrage pour tuyaux

(30) Priority: 14.03.1989 NL 8900619
(43) Date of publication of application: 19.09.1990
(60) Divisional application: 92202674.5
(73) Proprietor: J. van Walraven B.V., NL-3641 RK Mijdrecht (NL)
(72) Inventor: van Walraven, Jan, NL-3641 GP Mijdrecht (NL)
(74) Representative: Boelsma, Gerben Harm, Ir.

(56) References cited:
- EP-A- 0 188 649
- DE-U- 8 806 714

## Description

The invention relates to a pipe-clip, comprising an annular clip body formed from a flexible strip, the ends of which are integrally bent into flanges adapted to be pulled together by means of a fastening screw and nut, in which one of the flanges has an outwardly opening slot adapted to laterally receive the shank of the fastening screw whereas the nut is comprised in an auxiliary part that normally bears on the side of the second flange turned away from the first flange and that is fastened in such a way, that it may resiliently bend away from said second flange through a certain angle about an axis located adjacent the transition between the annular clip body and said flange, in such a way, that, when applying the annular clip body around a pipe or similar article - causing the two flanges to move one towards the other - the screw provisorily threaded into the nut supported by the auxiliary part will first - due to the first flange pressing against the head of the screw - tilt outwardly within a slot-shaped passage opening in said second flange and then tilt back under spring action so that its shank is entering into said outward opening slot.

Such a pipe-clip is known from EP-A-188649.

With this well-known pipe-clip the auxiliary part is a plate-like element which is integrally formed with the nut and which has a lip extending substantially under a right angle through a slot at the respective end of the annular clip body and thus having a sort of hook connection with the clip body. The annular clip body has on its inner side a resilient lining of rubber, which pushes the projecting lip of the flange against the inner side of the annular clip body and thus holds the second flange in its normal position (i.e. radially relative to the annular clip body). When applying this well-known clip around a pipe or similar article to be fastened, the lip may, in the initial phase when the annular clip body has a rather large clearance relative to the pipe yet - turn inwardly against the pressure of the rubber lining so that the flange is permitted to perform a certain pivoting movement relative to the annular clip body so as to allow the required tilting movement of the fastening screw to take place. As soon as the head of the screw will have passed the terminal edge of said first flange, the elasticity of the rubber lining causes the lip and thereby the second flange to return into its initial position, whereby the shank of the fastening screw will "snap" into the slot of said first flange.

A disadvantage of this well-known pipe-clip is to be seen in that the correct functioning of it is dependent on the use of a resilient lining acting as a spring.

The present invention aims at providing a pipe-clip of the type above referred to, which does not have the disadvantages of the well-known pipe-clip described hereinabove and the functioning of which is not dependent on the spring action of a lining within the clip body.

The pipe-clip proposed by the present invention is characterized in that the auxiliary part consists of a thin piece of plastic material, provided with a recess for accommodating the fastening nut, said piece having integrally formed means constituted by either integrally formed lips with projecting fastening studs, which fit into corresponding holes in the second flange adjacent the transition to the clip body, or two integrally formed longitudinal edges facing one towards the other, which engage the longitudinal edges of said second flange, cuts starting from one end of the auxiliary part being provided to form a resilient tongue that comprises the recess for the nut.

It is to be noted that DE-U-8806714 discloses a pipe-clip of the general type indicated hereinabove, with which the auxiliary part is in the form of a rather complicated spring clip for clamping the nut in a resilient manner against the outer face of the second flange, so that this pipe-clip is for its proper functioning neither dependent of the use of a resilient lining.

The invention will be hereinafter further explained with reference to the drawings, in which two embodiments of the invention are shown.
Fig. 1A and 1B show a perspective view and a cross-sectional view respectively of a part of a clip body of a pipe clip according to the invention in a first embodiment; and
fig. 2A-c show side-, front- and plan views of a modification of the auxiliary part of fig. 1A-B.

In the drawings 1 designates a portion of an integrally formed annular clip body that is made of a metallic strip which is not further shown and corresponds with the type of the annular clip body shown in EP-A-188649. The ends of the annular clip body are bent to form a first flange and a second flange. The first flange (not shown) is provided with a radial slot emanating from the terminal edge of said flange, while the second flange 3 is provided with a corresponding slot-shaped opening for accommodating the threaded shank of a fastening screw 8, the head of which is indicated at 7.

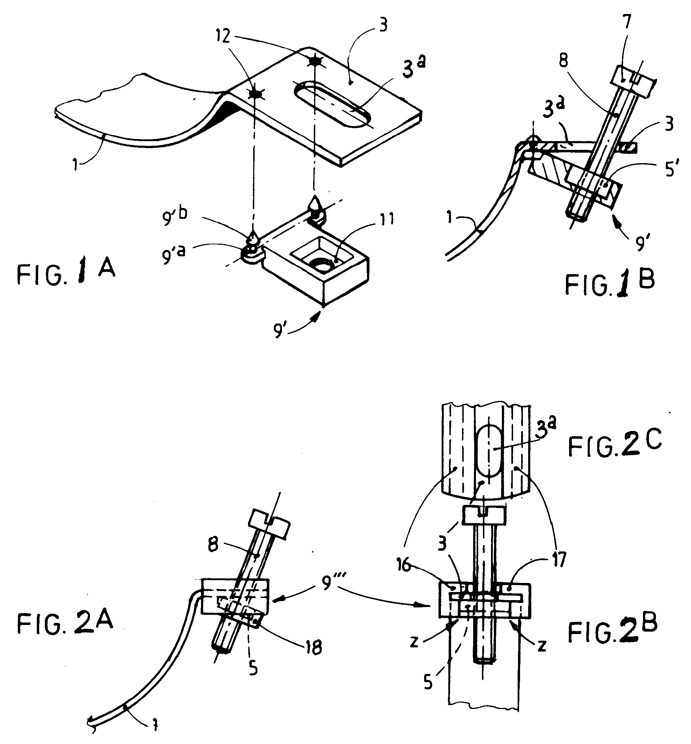

In the embodiment according to fig. 1A-B the auxiliary part 9' consists of a thin piece of plastics material, provided with a recess 11 for accommodating the (e.g.) square nut 5' (fig. 1B). One end of the auxiliary part 9' of plastics material is provided with integrally formed lips 9'a having projecting fastening studs 9'b, which fit in corresponding holes 12 in the second flange 3 adjacent the transition to the clip body 1. It will be understood that upon assembling of the separate parts shown in fig. 1A the auxiliary part 9' will bear onto the lower side of the flange 3. It is shown in fig. 1B, how a clamping screw 8 provisorily screwed into the nut 5' sunk into the auxiliary part 9', may tilt outwardly by bending the auxiliary part 9' downwardly about a bending line through the fastening studs 9'b. As with the well-known pipe clip disclosed in EP-A-188,649, such an outwardly tilting movement will take place when the annular clip body 1 is clamped around a pipe (not shown). In the initial plan of the clamping procedure the first flange (not shown) engages the head 7 of the clamping screw 8 and urges the latter to tilt; as soon as the first flange has passed the screw head 7 of the clamping screw 8 will snap with its shank into the slot of the first flange and take an upright position relative to the two adjacent flanges.

In the embodiment of fig. 2A-C, showing a modification of the auxiliary part of fig. 1A, B, the auxiliary part 9‴ formed of plastics material is provided with two integrally formed longitudinal edges 16, 17 facing one towards the other. These longitudinal edges may, in a similar way as described in connection with the embodiment according to fig. 1A, B, engage the longitudinal edges of the second flange 3. Also two cuts Z are provided, due to which a tongue 18 is formed, which comprises the recess containing the nut 5 and which may bend in the manner shown in fig. 5A so as to permit the screw 8 to tilt outwardly.

## Claims

1. A pipe-clip, comprising an annular clip body (1) formed from a flexible strip, the ends of which are integrally bent into flanges (3) adapted to be pulled together by means of a fastening screw and nut (8, 5), in which one of the flanges has an outwardly opening slot adapted to laterally receive the shank of the fastening screw (8) whereas the nut (5) is comprised in an auxiliary part (9', 9‴) that normally bears on the side of the second flange (3) turned away from the first flange and that is fastened in such a way, that it may resiliently bend away from said second flange (3) through a certain angle about an axis located adjacent the transition between the annular clip body (1) and said flange (3) in such a way, that, when applying the annular clip body (1) around a pipe or similar article-causing the two flanges (3) to move one towards the other - the screw provisorily threaded (8) into the nut supported by the auxiliary part (9', 9‴) will first - due to the first flange pressing against the head (7) of the screw (8) - tilt outwardly within a slot-shaped passage (3a) opening in said second flange (3) and then tilt back under spring action so that its shank is entering into said outward opening slot, characterized in that the auxiliary part (9', 9‴) consists of a thin piece of plastic material, provided with a recess (11) for accommodating the fastening nut (5), said piece having integrally formed means constituted by either integrally formed lips (9'a) with projecting fastening studs (9'b), which fit into corresponding holes (12) in the second flange (3) adjacent the transition to the clip body, or two integrally formed longitudinal edges (16, 17) facing one towards the other, which engage the longitudinal edges of said second flange, cuts (z) starting from one end of the auxiliary part being provided to form a resilient tongue (18) that comprises the recess for the nut.

## Patentansprüche

1. Rohrschelle, mit einem aus einem biegsamen Bandstreifen geformten ringförmigen Schellenkörper (1), dessen Enden zu Flanschen (3) umgebogen sind, welche mittels einer Befestigungsschraube und Mutter (8, 5) zusammenziehbar sind, wobei der Flansche einen nach aussen öffnenden Schlitz zum seitlichen Aufnehmen der Schacht der Befestigungsschraube (8) aufweist, während die Mutter (5) in einem Hilfsteil (9', 9‴) aufgenommen ist, der normalerweise auf der vom ersten Flansch abgekehrten Seite des zweiten Flansches (3) anliegt und derart befestigt ist, dass er um eine bestimmte Winkel um eine in der Nähe des Übergangs zwischen dem Schellenkörper (1) und dem zweiten Flansch (3) liegende Achse gegen Federwirkung vom genannten Flansch (3) hinweg biegen kann in der Weise, dass beim Anbringen des ringförmigen Schellenkörpers (1) um ein Rohr oder derartigen Gegenstand - wobei die beiden Flansche (3) zwangsläufig zueinander bewegt werden - die provisorisch in der vom Hilfsteil (9', 9‴) gestützten Mutter eingeschraubte Schraube (8) zunächst, in Folge der Pressung des ersten Flansches gegen den Kopf (7) der Schraube (8) - in einem schlitzförmigen Loch (3a) im zweiten Flansch (3) nach aussen kippt und darauf unter Federwirkung zurück kippt so dass die Schraubenschaft in den nach aussen öffnenden Schlitz hineintreten kann, dadurch gekennzeichnet, dass der Hilfsteil (9', 9‴) aus einem mit einer Aussparung zum Aufnehmen der Befestigungsmutter (5) versehenen dünnen Kunststoffstück besteht, welches Stück angeformte Mittel aufweist, welche entweder durch angeformte Lippen (9'a) mit ausragenden, in entsprechenden Löchern (12) im zweiten Flansch (3) in der Nähe des Übergangs zum Schellenkörper einpassenden Befestigungszapfen (9'b) gebildet werden oder durch angeformte, einander zugewendeten Längsränder (16, 17) gebildet werden, welche die Längsränder des zweiten Flansches umgreifen, wobei von einem Ende des Hilfsteils EEinschnitte (z) ausgehen, wodurch eine die Nut enthaltende federnde Zunge (18) gebildet ist.

## Revendications

1. Collier de serrage pour tuyau, comprenant un corps (1) annulaire de collier de serrage formé à partir d'une bande flexible, dont les extrémités sont courbées en étant venues de matière sous forme de brides (3) adaptées pour être tirées l'une vers l'autre au moyen d'une vis et d'un écrou de fixation (8, 5), dans lequel une des brides a une fente formant ouverture vers l'extérieur adaptée pour recevoir latéralement la tige de la vis (8) de fixation tandis que l'écrou (5) est constitué dans une partie auxiliaire (9', 9‴) qui porte normalement sur le côté de la seconde bride (3) éloigné de la première bride et qui est fixée de manière telle qu'elle peut être courbée élastiquement en s'éloignant de cette seconde bride (3) sur un certain angle autour d'un axe adjacent à la zone de transition existant entre le corps (1) annulaire du collier de serrage et cette bride (3), de telle sorte que lors de l'application du corps (1) annulaire du collier de serrage autour d'un tuyau ou article similaire (provoquant le déplacement des deux brides (3) l'une vers l'autre) la vis (8) provisoirement vissée dans l'écrou supporté par la partie auxiliaire (9', 9‴) sera tout d'abord (du fait que la première bride appuie contre la tête (7) de la vis (8)) basculée vers l'extérieur dans une overture (3a) formant passage en forme de fente située dans cette seconde bride (3) et ensuite sera ramenée sous une action formant ressort de sorte que sa tigre entre dans cette fente ouvrant vers l'extérieur, caractérisé en ce que la partie auxiliaire (9', 9‴) est constituée d'une pièce mince en matière plastique, munie d'une cavité (11) destinée à recevoir l'écrou fixe (5), cette pièce ayant des moyens formés en étant venus de matière constitués soit par des lèvres (9'a) formées en étant venues de matière ayant des crampons (9'b) de fixation faisant saillie qui s'adaptent dans des trous (12) correspondants de la second bride (3) adjacents à la transition avec le corps du collier de serrage, soit par deux bords (16, 17) longitudinaux formés en étant venus de matière en vis à vis l'un de l'autre, qui viennent en contact avec les bords longitudinaux de cette seconde bride, des découpes (Z) à partir d'une extrémité de la partie auxiliaire étant produites pour former une languette (18) élastique qui comprend la cavité pour écrou.
